Europäisches Patentamt

European Patent Office

Office européen des brevets

(11) Publication number: **0 189 681 B1**

## EUROPEAN PATENT SPECIFICATION

(45) Date of publication of patent specification: **02.12.92**

(51) Int. Cl.5: **F02C 1/00**, F03B 13/00, F03B 17/00

(21) Application number: **85309548.7**

(22) Date of filing: **31.12.85**

(54) Generator apparatus employing fluid flow.

(30) Priority: **30.01.85 JP 15733/85**
**01.02.85 JP 18935/85**
**20.02.85 JP 32529/85**
**21.02.85 JP 33431/85**

(43) Date of publication of application:
**06.08.86 Bulletin 86/32**

(45) Publication of the grant of the patent:
**02.12.92 Bulletin 92/49**

(84) Designated Contracting States:
**DE FR GB IT**

(56) References cited:
| | |
|---|---|
| BE-A- 897 898 | BE-A- 897 898 |
| DE-A- 2 713 555 | DE-A- 2 713 555 |
| DE-A- 3 014 971 | DE-A- 3 048 070 |
| DE-C- 660 812 | FR-A- 2 310 018 |
| FR-A- 2 530 739 | GB-A- 2 042 085 |

PATENTS ABSTRACTS OF JAPAN, vol. 6, no. 232 (M-172)[1110], 18th November 1982; JP - A - 57 131 869 (UHEIJI NAKAYAMA) 14-08-1982

(73) Proprietor: **Saitou, Yutaka**
**No. 24-25, 1-chome, Kikui Nishi-ku**
**Nagoya-shi Aichi-ken(JP)**

(72) Inventor: **Saitou, Yutaka**
**No. 24-25, 1-chome, Kikui Nishi-ku**
**Nagoya-shi Aichi-ken(JP)**

(74) Representative: **Huntingford, David Ian et al**
**W.P. THOMPSON & CO. Coopers Building**
**Church Street**
**Liverpool L1 3AB(GB)**

Rank Xerox (UK) Business Services

# Description

This invention relates to a generator apparatus employing fluid flow.

A variety of energy-saving measures have recently been considered from the economic viewpoint of various kinds of energy. For example, in working places where fossil fuels such as heavy oil are burned to provide a heat source, various devices have been contrived in order to efficiently burn even low-quality fuel. Among these devices, methods of extending a flue further upward or forcedly exhausting waste gases are commonly practised, and are also widely adopted for cooling purposes in summer, for example.

However, it is expensive to provide exhaust equipment and subsequently keep the equipment operating, and, additionally, exhaust gases are discharged into the atmosphere in a state wherein a large amount of energy remains therein.

A known device intended for the production of electricity is disclosed in BE-A- 897,898, and comprises a wheel which is driven by steam pressure generated in a steam generator. The wheel rotates and drives an electricity generator which is intended to provide the necessary electricity for the steam generator. However, it is stated in lines 24 and 25 of the description that perpetual motion might be possible with the apparatus.

It is a principal object of the present invention to provide a solution to the aforegoing problems of conventional apparatus.

According to the present invention there is provided a combustive gas exhauster device comprising an upwardly extending chimney having a waste gas inlet port at the lower end and a waste gas exhaust port at the upper end, a pump for initiating an upward flow of waste gas through the chimney having a vaned wheel extending into the chimney, the vaned wheel of the pump being drivable by an external source of energy and extending into the chimney in the vicinity of the waste gas inlet port, and a dynamo driven by the or each shaft to produce electricity, characterised by a plurality of energy recovery devices each comprising a rotatable vaned wheel mounted on a shaft and having blade portions extending into the chimney, each recovery device being located at a different level from the others between the pump and the waste gas exhaust port, the shaft of the vaned wheel being pivotally supported perpendicularly to the longitudinal direction of the exhaust conduit, and each energy recovery device being rotatable solely by passage of waste gases rising through the chimney.

In the above described arrangement, the exhaust gases drawn in through the suction port are given kinetic energy by the delivery section which is disposed near the suction port in such a manner that the vaned wheel thereof projects into the flow passage. The fluid thus energized flows toward the exhaust port through a given number of suction tubular portions and strikes the vaned wheels of the recovery section for driving each dynamo, so as to rotate the dynamos. When the exhaust gases strike and rotate each vaned wheel, they lose part of their kinetic energy. The foregoing gases continue to flow, and, when they strike and rotate the vaned wheel of the next stage they again lose part of their residual kinetic energy. In this manner, the vaned wheels, which are disposed such as to form a given number of stages, are sequentially rotated by part of the kinetic energy, thereby enabling the recovery of the kinetic energy in the form of electric power. The exhaust gases are finally discharged into the atmosphere in a state wherein a greater part of the energy contained therein is lost.

The invention is described further hereinafter, by way of example only, with reference to the accompanying drawings, wherein:-

Fig. 1 is a longitudinal side sectional side view illustrating an embodiment wherein three vaned wheels are disposed in the flow passage for a fluid such that a gaseous body flows from bottom to top;

Fig. 2 is a longitudinal sectional view taken on the line II - II of Fig. 1; and

Fig. 3 is a partially cutaway side elevational view showing an embodiment wherein two vaned wheels are respectively disposed in three flow passages, whose upper portions are integrally joined such that a gaseous body flows from bottom to top.

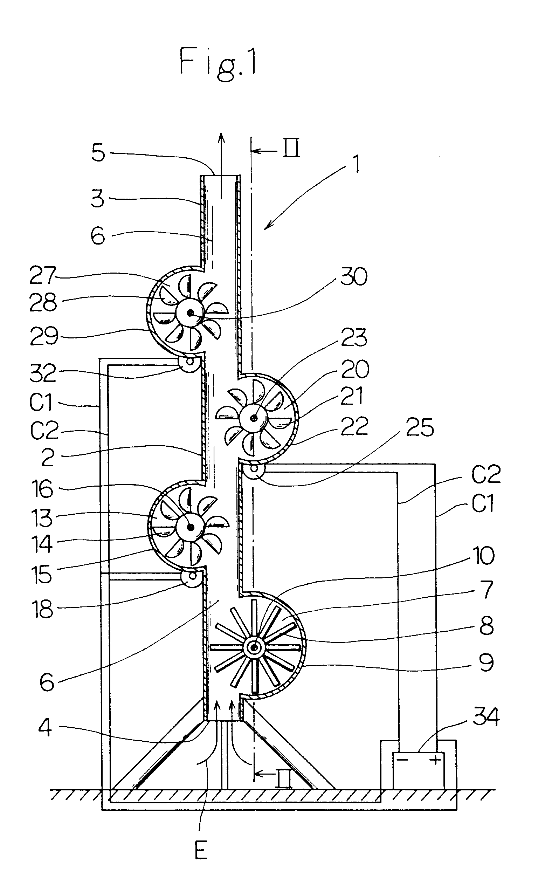

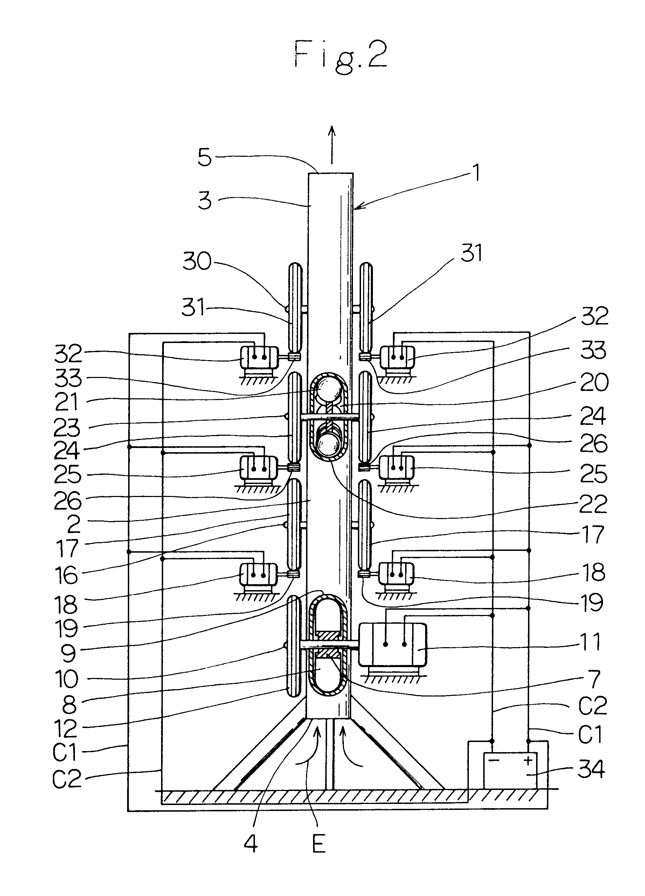

Figs. 1 and 2 show an exhauster device 1 for a gaseous body which is equipped with energy recovering capabilities, the exhauster device 1 having a vertical tubular structure comprising tubular suction portion 2 having a hollow body of a given sectional shape and an tubular exhaust portion 3 of the same shape which extends upward of the portion 2. A suction port 4 is formed at the lower end of the tubular section portion 2 while an exhaust port 5 is formed at the upper end of the tubular exhaust portion 3. A flow path 6 of a fluid is formed through the exhaust device 1 by the flow of a gaseous body which is supplied via the suction port 4 and is exhausted through the exhaust port 5. A delivery device 7 for delivering the gaseous body is disposed near the suction port 4 and comprises a vaned wheel 8 which extends into the flow passage 6 and is housed in a casing 9 formed integrally with the tubular section portion 2, a shaft 10 of the wheel being pivotally supported by the casing 9, with one end of the shaft 10 coupled with the drive shaft of a motor 11 installed on a base and the other end coupled with a flywheel 12.

Above the delivery device 7 of the tubular section portion 2 there is disposed a first recovery device 13 comprising a vaned wheel 14 whose blade portions project into the flow path 6, the vaned wheel 14 being housed in a casing 15 which is formed integrally with the tubular suction portion 2. A shaft 16 of the vaned wheel 14 is pivotally supported by the casing 15. Two flywheels 17 having pneumatic tyres fitted onto their periphery are mounted on the two ends of the shaft 16, respectively, the peripheries of the flywheels 17 engaging respective drive wheels 19 provided on the shafts of two dynamos 18, the dynamos being installed on the base in such a manner that the respective dynamos 18 can be driven by the rotary motion of the two flywheels to produce electricity.

A second recovery device 20 is disposed above the first recovery device 13 and comprises a further vaned wheel 21 whose blade portions project into the flow path 6. The vaned wheel 21 is housed in a casing 22 which is formed integrally with the tubular suction portion 2 in the same manner as described above. A shaft 23 of the vaned wheel 21 is pivotally supported by the casing 22, flywheels 24 with pneumatic tyres fitted onto their periphery are mounted on both ends of the shaft 23, and the periphery of both flywheels 24 respectively engage drive wheels 26 which are provided on the shafts of dynamos 25 the latter being installed on the base such as to be capable of driving the respective dynamos 25.

In the uppermost position near the exhaust port 5, a third recovery device 27 is disposed which comprises a vaned wheel 28 whose blade portions project into the flow path 6. The vaned wheel 28 is housed in a casing 29 which is formed integrally with the tubular suction portion 2 in the same manner as described above. A shaft 30 of the vaned wheel 28 is pivotally supported by the casing 29, flywheels 31 with pneumatic tyres fitted onto their periphery are mounted on both ends of the shaft 30, and the peripheries of both flywheels 31 respectively engage drive wheels 33 and 33 of dynamos 32 and 32 which are installed on the base such as to be capable of driving the respective dynamos 32 to produce electricity. The delivery device 7, the first recovery device 13, the second recovery device 20 and the third recovery device 27 are provided at symmetrically opposed positions on each side of the suction tubular portion 2 at desired intervals along the same. The motor 11 is driven by the electric power which is supplied from a power supply 34 such as a storage battery and by the power which is generated by each dynamo 18,25 and 32 and is supplied by way of conductors C1 and C2.

In operating the exhauster device 1 which is constructed as described above, a fluid E, which is a gaseous body such as exhaust air, is first introduced into the suction port 4 and a starting circuit for the motor 11 is closed by a switch (not shown), so that the motor 11 is driven by the power which is provided from the power supply 34, causing the vaned wheel 8 of the delivery device 7 to be rotated clockwise. Since this clockwise rotation increases the kinetic energy of the fluid E thus introduced, the fluid E rises through the tubular suction portion 2 with such energy as to form the flow path 6 of the fluid E. Consequently, the fluid E rotates the vaned wheels 14, 21 and 28 of the respective energy recovery portions 13, 20 and 27 while consuming part of the kinetic energy which the fluid holds within itself. Finally, the fluid loses substantially all of its kinetic energy, reaches the tubular exhaust portion 3, and is then discharged from the exhaust port 5 into the atmosphere.

Each energy recovery portion 13, 20 and 27 which is given kinetic energy by the fluid E in this way rotates is associated dynamo 18, 25 and 32 by means of the flywheels 17, 24 and 31 and the drive wheels 19, 26 and 33 which adjoin the flywheels so as to produce electricity. Since the electric power thus generated is supplied to the motor 11 through the conductors C1 and C2, the motor 11 is capable of continuing to run in a state wherein the power provided from the power supply 34 is greatly reduced. Also, since a pneumatic tyre is fitted onto the periphery of each flywheel 17, 24 and 31, the flywheels do not have to forcedly adjoin the drive wheels 19, 26 and 33 of the respective motors 18, 25 and 32, whereby efficient rotary motion can be performed to effectively generate electricity.

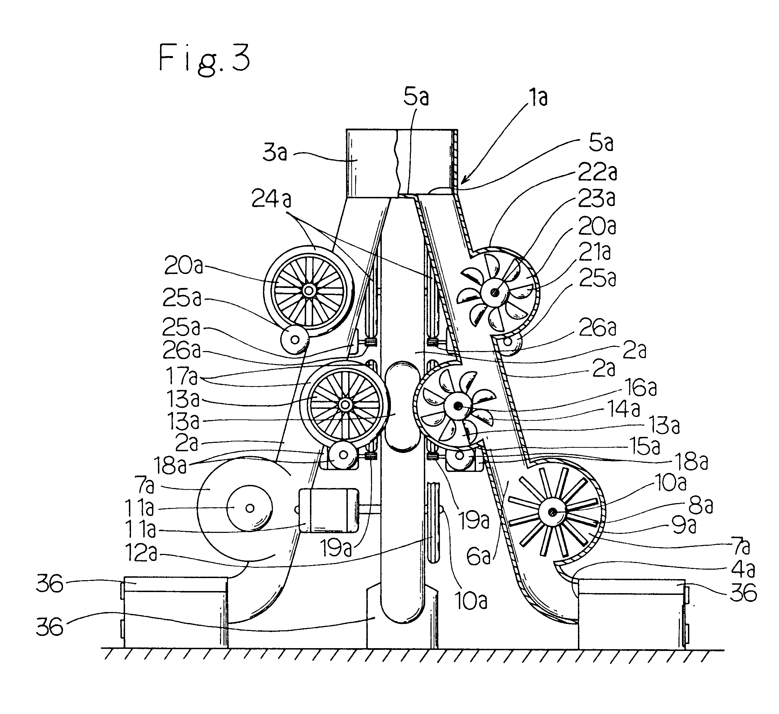

Fig. 3 illustrates another embodiment of the apparatus of this invention. In an exhauster device 1a wherein a plurality of exhaust air generating sources 36 such as boilers are disposed in a distributed manner, a plurality of tubular suction portions 2a are disposed such that a suction port 4a is opened to each exhaust air generating source 36 and all discharge ports 5a are combined into a single port so as to be connected to the upper exhaust tubular portion 3a; a flow path of a fluid is formed through each tubular suction portion 2a by the flow of a gaseous body which is supplied from the suction port 4a and discharged through the discharge port 5a where it intermingles before being discharged into atmosphere.

Near the suction port 4a of each tubular suction portion 2a, there is disposed a delivery device 7a comprising a vaned wheel 8a whose blade portions project into the flow path 6a. The vaned wheel 8a of the delivery device 7a is housed in a casing 9a of the same type as described above. A shaft 10a is pivotally supported by the casing 9a such that one end is coupled with the drive shaft of a motor 11a, with a flywheel 12a fitted onto the other end. On the downstream side of the delivery device 7a, a first energy recovery device 13a of a type similar to the above described embodiment is disposed wherein the blade portion of a vaned wheel 14a projects into the flow path 6a. The vaned wheel 14a is housed in a casing integral with the tubular suction portion 2a. A shaft 16a is pivotally supported by the casing 15a and pneumatic-tyre-fitted flywheels 17a and 17a are mounted on both ends of the shaft 16a. Additionally, both flywheels 17a adjoin respective drive wheels 19a of dynamos 18a similarly to above described embodiment.

Furthermore, on the upstream side of each first energy recovering device 13a, a second energy recovery device 20a similar to the above described device is disposed in such a manner that a vaned wheel 21a is housed in a casing 22a with its blade portion projecting into the flow path 6a. A shaft 23a is pivotally supported by the casing 22a, and pneumatic-tyre-fitted flywheels 24a and 24a are mounted on both ends of the shaft 23a and respectively adjoin drive wheels 26a of the two dynamos 25a of the same type as described above. The delivery devices 7a and the energy recovery devices 13a and 20a are arranged in the same manner as described above.

Although the procedures for operating this exhaust device 1a and the actions of each individual element are the same as those of the first described embodiment, the plurality of exhaust air generating sources 36 need not all be operated at the same time, and its suffices to actuate one or two sources alone. The arrangement is such that electric power can also be shared among the exhaust air generating sources in correspondence with a state of, for example, exhausting air.

In connection with the above embodiments, reference was made to an arrangement wherein a centrifugal-type vaned wheel of a delivery section is driven by a motor, the vaned wheels of the recovery section which constituted by two or three Pelton wheel type stages driving respective dynamos, the flywheel of each recovery section onto which a pneumatic tyre is fitted being provided on both sides of each vaned wheel, and the electric power thus generated being supplied as an auxiliary power source for the motor. However, the present invention not limited to this embodiment, and the size, number and material of the flywheel, the type, and number of stages of the delivery and recovery section, as well as the manner of using recovered energy, may be modified as required to the extent that the objects, actions and effects of the present invention described below are achievable.

As described above in detail, the flow path of the fluid in these embodiments is formed through the tubular suction portion with the suction port at one end and the discharge port at the other end, of delivery sections being disposed such that their vaned wheels project into the flow path, thereby absorbing the kinetic energy of the exhaust air so as to rotate the vaned wheels, and thus driving the dynamos by using the rotary motion of the vaned wheels and recovering the energy in the form of electric power for re-use purposes. Therefore, it is a matter of course that, in addition to the efficient combustion of low quality fuel and reductions in fuel costs, running costs are also reduced and measures against air pollution can be enjoyed.

## Claims

1. A combustive gas exhauster device comprising an upwardly extending chimney (2) having a waste gas inlet port (4) at the lower end and a waste gas exhaust port (5) at the upper end, a pump (7) for initiating an upward flow of waste gas through the chimney having a vaned wheel extending into the chimney (2), the vaned wheel of the pump (7) being drivable by an external source of energy and extending into the chimney (2) in the vicinity of the waste gas inlet port (4), and a dynamo (18) driven by the or each shaft (16) to produce electricity, characterised by a plurality of energy recovery devices (14) each comprising a rotatable vaned wheel (14) mounted on a shaft (16) and having blade portions extending into the chimney (2), each recovery device (14) being located at a different level from the others between the pump (7) and the waste gas exhaust port (5), the shaft (16) of the vaned wheel (14) being pivotally supported perpendicularly to the longitudinal direction of the exhaust conduit (2), and each energy recovery device being rotatable solely by passage of waste gases rising through the chimney (2).

2. A device as claimed in claim 1, comprising a plurality of upwardly extending chimneys (2a).

3. A device as claimed in any of the preceding claims, wherein the vaned wheel is adapted to drive a plurality of dynamos (18).

4. A device as claimed in any of the preceding claims, wherein the or each vaned wheel is housed in a casing (15) that is formed integrally with the chimney.

## Patentansprüche

1. Absaugvorrichtung für Verbrennungsgas umfassend einen nach oben sich erstreckenden Kamin (2) mit einer Abgaseinlaßöffnung (4) am unteren Ende und einer Abgasauslaßöffnung (5) am oberen Ende, einer Pumpe (7) zur Auslösung eines nach oben gerichteten Abgasstromes durch den Kamin, der ein sich in den Kamin (2) erstreckendes Schaufelrad aufweist, wobei das Schaufelrad der Pumpe (7) durch eine externe Energiequelle antreibbar ist und in der Nähe der Abgaseinlaßöffnung (4) sich in den Kamin (2) erstreckt, und einen von der oder jeder Welle (16) angetriebenen Dynamo (18) zur Produktion von Elektrizität, gekennzeichnet durch eine Vielzahl von Vorrichtungen zur Energierückgewinnung (14), wobei jede ein drehbares, auf einer Welle (16) angebrachtes Schaufelrad (14) aufweist und Schaufelteile, die sich in den Kamin (2) erstrecken, wobei jede der Rückgewinnungsvorrichtungen (14) in einem unterschiedlichen Abstand von den anderen zwischen der Pumpe (7) und der Abgasauslaßöffnung (5) angeordnet ist, die Welle (16) des Schaufelrades (14) senkrecht zur Längsrichtung des Absaugschachtes (2) drehbar gelagert ist und jede Vorrichtung zur Energierückgewinnung allein durch die Strömung des durch den Kamin (2) aufsteigenden Abgases drehbar ist.

2. Vorrichtung nach Anspruch 1 umfassend eine Vielzahl von sich nach oben erstreckenden Kaminen (2a).

3. Vorrichtung nach einem der vorhergehenden Ansprüche, worin das Schaufelrad geeignet ist, eine Vielzahl von Dynamos (18) anzutreiben.

4. Vorrichtung nach einem der vorhergehenden Ansprüche, worin das oder jedes Schaufelrad in einem Gehäuse (15) angeordnet ist, das in den Kamin integriert ausgebildet ist.

**Revendications**

1. Dispositif exhausteur de gaz comburant, comprenant une cheminée (2) s'étendant vers le haut et comportant à l'extrémité inférieure un orifice d'entrée de gaz brûlés (4) et à l'extrémité supérieure un orifice de sortie de gaz brûlés (5), une pompe (7), pour démarrer un écoulement ascendant de gaz brûlés dans la cheminée et dotée d'une roue à pales qui s'étend à l'intérieur de la cheminée (2), la roue à pales de la pompe (7) étant susceptible d'être entraînée par une source extérieure d'énergie et s'étendant dans la cheminée (2), à proximité de l'orifice d'entrée de gaz brûlés (4), et un générateur électrique (18) entraîné par l'arbre ou par chaque arbre (16), pour produire de l'électricité, caractérisé par une pluralité de dispositifs de récupération d'énergie (14), comprenant chacun une roue à pales (14) rotative, montée sur un arbre (16) et présentant des parties de pale s'étendant à l'intérieur de la cheminée (2), chaque dispositif de récupération (14) étant situé à un niveau différent des autres, entre la pompe (7) et l'orifice de sortie de gaz brûlés (5), l'arbre (16) de la roue à pales (14) étant monté pivotant, perpendiculairement à la direction longitudinale du conduit d'échappement (2) et chaque dispositif de récupération d'énergie étant susceptible d'être entraîné en rotation seulement sous l'effet du passage des gaz brûlés qui montent dans la cheminée (2).

2. Dispositif selon la revendication 1, comprenant une pluralité de cheminées (2a) s'étendant vers le haut.

3. Dispositif selon l'une quelconque des revendications précédentes, dans lequel la roue à pales est adaptée pour entraîner une pluralité de générateurs électriques (18).

4. Dispositif selon l'une quelconque des revendications précédentes, dans lequel la roue à pales ou chaque roue à pales est enfermée dans un carter (15) formé d'un seul tenant avec la cheminée.

Fig.1

# Fig.2

Fig.3